# EUROPÄISCHE PATENTSCHRIFT

(11) **EP 4 608 119 B1**
(45) Veröffentlichungstag und Bekanntmachung des Hinweises auf die Patenterteilung: **28.10.2026**
(21) Anmeldenummer: 23802231.3
(22) Anmeldetag: 07.11.2023
(51) Int. Cl.: A01B 69/04, A01B 79/00, G01S 17/88

(54) **HÖHENFÜHRUNG FÜR EIN SCHNITTSYSTEM, SCHNITTSYSTEM UND VERFAHREN ZUR HÖHENFÜHRUNG EINES SOLCHEN SCHNITTSYSTEMS**
HEIGHT GUIDE FOR A CUTTING SYSTEM, CUTTING SYSTEM AND METHOD FOR GUIDING THE HEIGHT OF SUCH A CUTTING SYSTEM
GUIDAGE EN HAUTEUR D'UN SYSTÈME DE COUPE, SYSTÈME DE COUPE ET PROCÉDÉ DE GUIDAGE EN HAUTEUR D'UN TEL SYSTÈME DE COUPE

(30) Priorität: 07.11.2022 DE 102022129369
(43) Veröffentlichungstag der Anmeldung: 03.09.2025
(73) Patentinhaber: Zürn Harvesting GmbH & Co. KG, 74214 Schöntal-Westernhausen (DE)
(72) Erfinder: STAHL, Martin, 97944 Boxberg-Schwabhausen (DE); ZÜRN, Rolf, 74214 Schöntal-Westernhausen (DE)
(74) Vertreter: Manitz Finsterwald Patent- und Rechtsanwaltspartnerschaft mbB
(86) Internationale Anmeldenummer: PCT/EP2023/081043
(87) Internationale Veröffentlichungsnummer: WO 2024/100068

(56) Entgegenhaltungen:
- EP-B1- 3 192 342
- US-A1- 2018 168 141
- US-A1- 2022 044 044
- US-A1- 2022 138 464
- US-A1- 2022 167 546
- US-B2- 10 568 316
- US-B2- 10 837 758
- US-B2- 9 423 249

## Beschreibung

Die vorliegende Erfindung betrifft eine Höhenführung für ein Schnittsystem zur Feldhygiene, insbesondere für einen Unkrautschneider und/oder eine Unkrautsamensammeleinheit, ein Schnittsystem, insbesondere einen Unkrautschneider und/oder eine Unkrautsamensammeleinheit, mit einer solchen Höhenführung, sowie ein entsprechendes Verfahren zur Höhenführung.

In der Landwirtschaft kommt es regelmäßig vor, dass ein Bestand an Unkraut über die Oberkante eines Nutzpflanzenbestandes hinauswächst. Dieser Überstand beschattet dann den Nutzpflanzenbestand und hemmt dessen Entwicklung beziehungsweise Wachstum.

Herkömmliche Höhenführungen sind nicht in der Lage, eine Zielschnittebene zu ermitteln, welche auf Höhe der Oberkante eines Nutzpflanzenbestandes liegt, wenn es einen entsprechenden Überstand an Unkraut gibt und damit die Oberkante des gesamten Bewuchsbestandes oberhalb der Oberkante des Nutzpflanzenbestandes liegt. Eine solche Bestimmung ist jedoch notwendig, um ein Schnittsystem zur Feldhygiene, insbesondere für einen Unkrautschneider und/oder eine Unkrautsamensammeleinheit, zur Entfernung des Unkrautüberstandes entsprechend zu steuern.

Eine herkömmliche Vorrichtung zur bloßen Bestimmung der Höhe des gesamten Bewuchsbestandes ist beispielsweise aus der US 10 837 758 B2 bekannt.

Vor dem Hintergrund des oben beschriebenen Problems ist es eine Aufgabe der vorliegenden Erfindung, eine Höhenführung, ein Schnittsystem und ein Verfahren anzugeben, welche eine zuverlässige Entfernung des besagten Unkrautüberstandes auf einem Feld ermöglichen.

Diese Aufgabe wird durch die Gegenstände der unabhängigen Ansprüche gelöst. Vorteilhafte Weiterbildungen der Erfindung sind den abhängigen Ansprüchen zu entnehmen.

Gemäß einem ersten Aspekt der vorliegenden Erfindung umfasst eine Höhenführung für ein Schnittsystem zur Feldhygiene, insbesondere für einen Unkrautschneider und/oder eine Unkrautsamensammeleinheit, eine Sensorik zur Ermittlung eines Bewuchsbestandes eines Feldes und eine Auswerteinheit, welche mit der Sensorik gekoppelt ist. Die Auswerteinheit ist dazu ausgebildet, den ermittelten Bewuchsbestand zu analysieren und eine Zielschnittebene zu ermitteln, welche auf Höhe der Oberkante eines Nutzpflanzenbestandes liegt. Dabei liegt die besagte Zielschnittebene unterhalb einer Oberkante des gesamten Bewuchsbestandes.

Mit anderen Worten ist die Auswerteinheit dazu ausgebildet, eine unterhalb der Oberkante des gesamten Bewuchsbestandes liegende Oberkante des Nutzpflanzenbestandes und damit die Lage der Zielschnittebene zu ermitteln. Wird die Schnittebene des Schnittsystems dann entsprechend der Zielschnittebene eingestellt, kann mit dem Schnittsystem zuverlässig ein über die Oberkante des Nutzpflanzenbestandes hinausragender Überstand an Unkraut abgeschnitten und gegebenenfalls eingesammelt werden. Ein Bestand an Unkraut im Bereich des Stengelbereichs der Nutzpflanzen bis hin zur Oberkante des Nutzpflanzenbestandes selbst, bleibt dabei unberührt.

Bezüglich der Ermittlung des Bewuchsbestandes sei darauf hingewiesen, dass es erfindungsgemäß nicht notwendig ist, die Gesamtheit des Bewuchsbestandes vollumfänglich zu ermitteln und zu analysieren. Je nach konkreter Ausgestaltung der Auswerteinheit kann beispielsweise der Unkrautbestand im Stengelbereich der Nutzpflanzen bei der Ermittlung des Bewuchsbestandes unberücksichtigt bleiben. Andererseits kann auch eine Bodenebene des Feldes zur Ermittlung des Bewuchsbestandes herangezogen werden.

Wichtig für die vorliegende Erfindung ist, dass die Daten aus der Ermittlung des Bewuchsbestandes es der Auswerteinheit ermöglichen, die besagte Zielschnittebene zur Entfernung des Unkrautüberstandes zu ermitteln. Welche Daten bezüglich des Bewuchsbestandes dabei konkret verwendet werden, hängt von der jeweiligen Bewuchssituation ab.

Bevorzugt umfasst die Sensorik mindestens einen kontaktlosen Sensor.

Als kontaktlos wird hierbei ein Sensor verstanden, welcher keine mechanische Abtastung vornimmt. Kontaktlose Sensoren haben den Vorteil, weniger verschleißanfällig zu sein und liefern üblicherweise ein umfangreicheres beziehungsweise vollständigeres Gesamtbild des jeweiligen Bewuchsbestandes.

Bevorzugt umfasst die Sensorik nur kontaktlose Sensoren.

Der vollständige Verzicht auf mechanische Kontaktsensoren ermöglicht eine effizientere Ausgestaltung der Sensorik und die Erhöhung der Lebensdauer dieser.

Bevorzugt umfasst die Sensorik mindestens einen der folgenden Sensoren: einen optischen Sensor, insbesondere eine 2D-, 3D-, Stereo- und/oder Multispektral-Kamera; einen Lasersensor; einen LiDAR-(light detection and ranging)-Sensor; einen akustischen Sensor, insbesondere einen Ultraschallsensor; und/oder einen Radar-sensor.

Die aufgelisteten Sensoren haben sich als besonders geeignet zur Ermittlung des Bewuchsbestandes eines Feldes erwiesen. Insbesondere erlauben sie es verschleißfrei den Bewuchsbestand des Feldes ausreichend detailliert abzubilden.

Bevorzugt umfasst die Sensorik mindestens zwei Sensoren und ist die Auswerteinheit dazu ausgebildet, die Zielschnittebene basierend auf den Signalen von mindestens zwei dieser Sensoren zu ermitteln und/oder zu verifizieren.

Dabei kann es sich bei den mindestens zwei Sensoren sowohl um Sensoren unterschiedlicher Ausgestaltung beziehungsweise Funktionsweise als auch um mindestens zwei zueinander ähnliche oder gar identische Sensoren handeln. Wichtig im Sinne der vorliegenden Erfindung ist dabei lediglich, dass jeder der Sensoren den Bereich abbildet, in welchem der entsprechende Bewuchsbestandes zu ermitteln ist. Insbesondere liefern die unterschiedlichen Sensoren dabei auch unterschiedliche Daten über den entsprechenden Bereich. Die unterschiedlichen Daten können dabei von einer unterschiedlichen technischen oder funktionellen Ausgestaltung der jeweiligen Sensoren oder lediglich von einer unterschiedlichen Positionierung und Ausrichtung der jeweiligen Sensoren herrühren.

Nach einer Ausgestaltung der Erfindung kann die Auswerteinheit dazu ausgebildet sein, anhand eines ersten Satzes von Sensoren die Zielschnittebene zu ermitteln und anhand eines zweiten Satzes von Sensoren, welcher insbesondere Sensoren umfasst, welche nicht auch dem ersten Satz von Sensoren zugeordnet sind, die Zielschnittebene zu verifizieren. Dies ermöglicht eine noch genauere und zuverlässigere Ermittlung der Zielschnittebene und damit eine Optimierung der Höhenführung des Schnittsystems.

Bevorzugt weist die Sensorik eine 3D-Stereo-Kamera auf und ist die Auswerteinheit dazu ausgebildet, die Zielschnittebene mittels Auswertung einer darüber erhaltenen 3D-Punktwolke zu ermitteln.

Solche 3D-Stereo-Kamereas haben sich bei Tests als besonders geeignet erwiesen, um die Lage der Zielschnittebene auf Höhe der Oberkante des Nutzpflanzenbestandes, besonders zuverlässig und zielsicher zu ermitteln.

Bevorzugt umfasst die Sensorik einen Ultraschall- oder Radar-Sensor und ist die Auswerteinheit dazu ausgebildet, eine bereits ermittelte Zielschnittebene anhand der Ausgabe des Ultraschall- oder Radar-Sensors zu verifizieren.

Entsprechende Ultraschall- und Radar-Sensoren sind sowohl vergleichsweise günstig als auch langlebig und haben sich dennoch als zur Verifizierung der Lage der Zielschnittebene geeignet erwiesen.

Bevorzugt ist die Auswerteinheit dazu ausgebildet, die Oberkante des gesamten Bewuchsbestandes und/oder eine Oberkante eines Unkrautbestandes im Stengelbereich des Nutzpflanzenbestandes und/oder die Bodenebene zu ermitteln.

Dadurch können insbesondere die Oberkante des gesamten Bewuchsbestandes, also der Gesamtheit aus Nutzpflanzenbestand und Unkrautbestand, und/oder die Bodenebene zur Ermittlung der Oberkante des Nutzpflanzenbestandes und damit der Zielschnittebene oder zur Einstellung des Schnittsystems auf die Zielschnittebene als Bezugspunkt fungieren. Die Oberkante des Unkrautbestandes im Stengelbereich kann weitere wertvolle Informationen über den gesamten Bewuchsbestand liefern.

Bevorzugt ist dabei die Auswerteinheit dazu ausgebildet, die Zielschnittebene über eine positive Höhe in Bezug auf die Bodenebene oder über eine negative Höhe in Bezug auf die Oberkante des gesamten Bewuchsbestandes zu ermitteln.

Die Definition der Zielschnittebene über die positive Höhe in Bezug auf die Bodenebene ermöglicht insbesondere bei bodengebundenen Schnittsystemen, niedrigem Nutzpflanzenbestand und/oder hohem Unkrautüberstand eine besonders zielsichere und genaue Steuerung des Schnittsystems. Die Definition der Zielschnittebene über die negative Höhe in Bezug auf die Oberkante des gesamten Bewuchsbestandes ermöglicht insbesondere bei fliegenden Schnittsystemen, hohem Nutzpflanzenbestand und/oder niedrigem Unkrautüberstand eine besonders zielsichere und genaue Steuerung des Schnittsystems.

Bevorzugt ist die Auswerteinheit mit wenigstens einer Ausgabeeinheit, welche ein Signal ausgibt, welches die Lage der Zielschnittebene anzeigt, gekoppelt oder koppelbar.

Eine solche Ausgabeeinheit ermöglicht die einfache und zweckdienliche Übermittlung der Informationen zur Lage der Zielschnittebene zur entsprechenden Höhenführung des Schnittsystems.

Bevorzugt umfasst die Ausgabeeinheit eine optische Anzeige, insbesondere in Gestalt eines Bildschirms oder einer LED-Anzeige, welche einen Benutzer des Schnittsystems über die Lage der ermittelten Zielschnittebene informiert.

Dies ermöglicht es auf einfache Art und Weise einem Benutzer des Schnittsystems, die manuelle Einstellung der Schnittebene des Schnittsystems entsprechend der ermittelten Zielschnittebene vorzunehmen.

Alternativ oder ergänzend dazu, ist die Ausgabeeinheit dazu ausgebildet, mit einer Steuereinheit des Schnittsystems gekoppelt zu werden und an die Steuereinheit ein Steuersignal auszugeben, welches eine Schnittebene des Schnittsystems entsprechend der ermittelten Zielschnittebene einstellt.

Dies ermöglicht eine vollautomatische Einstellung der Schnittebene des Schnittsystems. Durch eine parallel dazu vorgesehene optische Anzeige für einen Benutzer kann dieser die automatisch vorgenommene Einstellung der Schnittebene noch einmal kontrollieren und gegebenenfalls manuell justieren.

Gemäß einem zweiten Aspekt der vorliegenden Erfindung umfasst ein Schnittsystem zur Feldhygiene, insbesondere in Gestalt eines Unkrautschneiders und/oder einer Unkrautsamensammeleinheit, eine Schnitteinheit zur Beschneidung des Bewuchses eines Feldes, eine Steuereinheit zur Einstellung einer Schnittebene des Schnittsystems und eine der zuvor beschriebenen Höhenführungen.

Dies ermöglicht es ein Schnittsystem zu erhalten, welches zuverlässig und zielsicher einen Unkrautüberstand beseitigen kann.

Gemäß einem dritten Aspekt der vorliegenden Erfindung umfasst ein Verfahren zur Höhenführung eines Schnittsystems zur Feldhygiene, insbesondere des zuvor beschriebenen Schnittsystems, die folgenden Schritte: Ermittlung eines Bewuchsbestandes eines Feldes mittels einer Sensorik; Analyse des ermittelten Bewuchsbestandes mittels einer Auswerteinheit; automatische Ermittlung einer Zielschnittebene, welche auf Höhe einer Oberkante eines Nutzpflanzenbestandes liegt, welche selbst unterhalb einer Oberkante des gesamten Bewuchsbestandes liegt; und Einstellung einer Schnittebene des Schnittsystems entsprechend der ermittelten Zielschnittebene.

Die Ermittlung der Zielschnittebene, welche die Oberkante des Nutzpflanzenbestandes anzeigt, mittels des genannten Verfahrens ermöglicht die zuverlässige und zielsichere Entfernung des bereits oben beschriebenen Unkrautüberstandes. Herkömmliche Verfahren sind nicht dazu in der Lage, eine entsprechende Zielschnittebene auf Höhe der Oberkante des Nutzpflanzenbestandes zu ermitteln, wenn ein Unkrautüberstand vorliegt.

Bevorzugt erfolgt die Ermittlung des Bewuchsbestandes im Wesentlichen, insbesondere vollständig, kontaktlos.

Dafür werden entsprechende kontaktlose Sensoren eingesetzt. Dies ermöglicht eine besonders effiziente Ermittlung der Zielschnittebene und die Reduktion oder gar Vermeidung von Verschleiß in dem entsprechenden System.

Bevorzugt wird auch die Oberkante des gesamten Bewuchsbestandes, eine Oberkante eines Unkrautbestandes im Stengelbereich des Nutzpflanzenbestandes und/oder die Bodenebene ermittelt und insbesondere bei der Einstellung der Schnittebene berücksichtigt.

Wie bereits oben dargelegt, können insbesondere die Oberkante des gesamten Bewuchsbestandes, also der Gesamtheit aus Nutzpflanzenbestand und Unkrautbestand, und/oder die Bodenebene zur Ermittlung der Oberkante des Nutzpflanzenbestandes und damit der Zielschnittebene sowie zur Einstellung des Schnittsystems auf die Zielschnittebene als Bezugspunkt fungieren. Die Oberkante des Unkrautbestandes kann weitere wertvolle Informationen über den gesamten Bewuchsbestand liefern.

Bevorzugt wird die Zielschnittebene über eine positive Höhe in Bezug auf die Bodenebene oder über eine negative Höhe in Bezug auf die Oberkante des gesamten Bewuchsbestandes ermittelt.

Wie bereits oben dargelegt, ermöglicht die Definition der Zielschnittebene über die positive Höhe in Bezug auf die Bodenebene insbesondere bei bodengebundenen Schnittsystemen, niedrigem Nutzpflanzenbestand und/oder hohem Unkrautüberstand eine besonders zielsichere und genaue Steuerung des Schnittsystems. Die Definition der Zielschnittebene über die negative Höhe in Bezug auf die Oberkante des gesamten Bewuchsbestandes ermöglicht insbesondere bei fliegenden Schnittsystemen, hohem Nutzpflanzenbestand und/oder niedrigem Unkrautüberstand eine besonders zielsichere und genaue Steuerung des Schnittsystems.

Die Erfindung wird nachfolgend beispielhaft unter Bezugnahme auf die beiliegenden Zeichnungen beschrieben. Es zeigt,
- FIG. 1: ein erstes Beispiel für einen Bewuchsbestand eines Feldes, bei welchem der Einsatz eines erfindungsgemäßen Systems beziehungsweise Verfahrens möglich und sinnvoll ist;
- FIG. 2: ein zweites Beispiel für einen Bewuchsbestand eines Feldes, bei welchem der Einsatz eines erfindungsgemäßen Systems beziehungsweise Verfahrens möglich und sinnvoll ist;
- FIG. 3: ein drittes Beispiel für einen Bewuchsbestand eines Feldes, bei welchem der Einsatz eines erfindungsgemäßen Systems beziehungsweise Verfahrens möglich und sinnvoll ist;
- FIG. 4: ein schematisches Beispiel für die Funktionsweise eines erfindungsgemäßen Systems;
- FIG. 5: ein Beispiel für Daten, welche einen Bewuchsbestand eines Feldes anzeigen; und
- FIG. 6: eine Aufnahme eines zu bearbeitenden Feldabschnitts mit ermittelter Zielschnittebene.

Die vorliegende Erfindung dient zur Höhenführung eines Schnittsystems zur Entfernung eines Unkrautüberstandes a, welcher über eine Oberkante des Nutzpflanzenbestandes b eines Feldes hinausragt. Anders als dargestellt, kann der Überstand dabei auch ungleichmäßig sein.

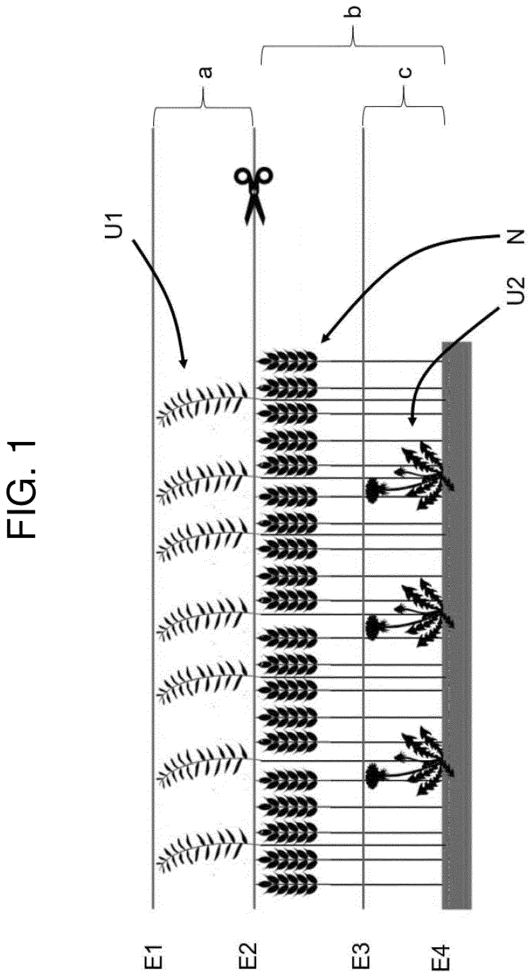

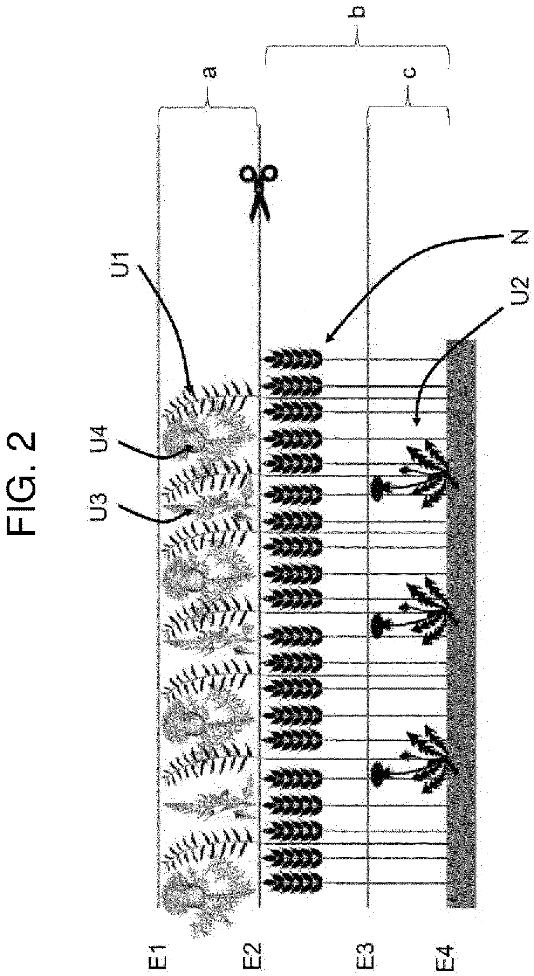

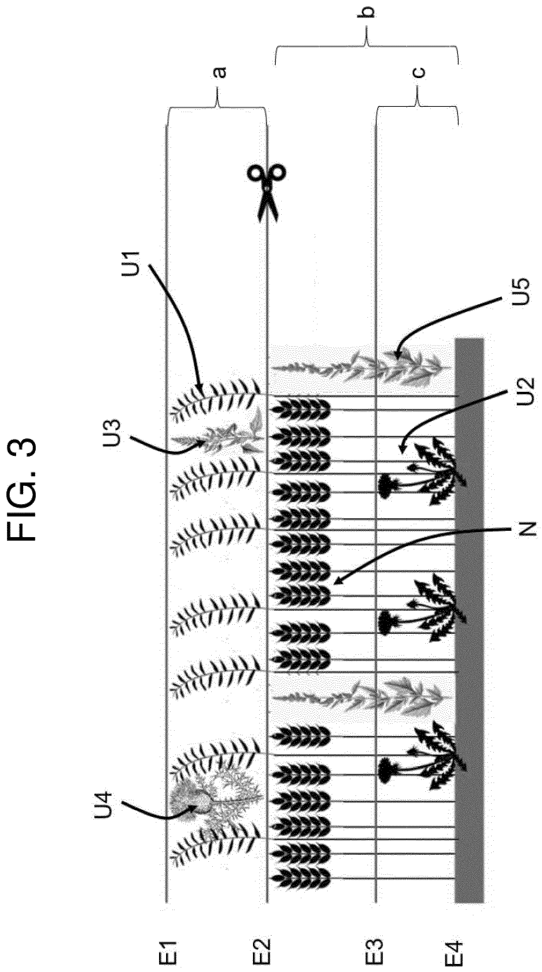

Es ist nicht von Relevanz, ob es auch einen Unkrautbestand c im Stengelbereich des Nutzpflanzenbestandes b (vgl. Figuren 1 bis 3) oder einen Unkrautbestand gibt, welcher lediglich bis zur Oberkante E2 des Nutzpflanzenbestandes reicht (vgl. FIG. 3). Auch ist es erfindungsgemäß nicht von Relevanz, ob der Unkrautüberstand a licht ist (vgl. FIG. 1), dicht ist (vgl. FIG. 2) oder ungleichmäßig ist (vgl. FIG. 3). Dabei kann die Zusammensetzung des Unkrautüberstandes a homogen (vgl. FIG. 1) oder heterogen sein (vgl. Figuren 2 und 3). Lediglich überhaupt das Vorliegen eines Unkrautüberstandes a (zumindest bereichsweise) ist für den Einsatz der vorliegenden Erfindung notwendig.

In den Figuren 1 bis 4 zeigt Ebene E1 die Oberkante des gesamten Bewuchsbestandes a, b und c an, Ebene E2 entspricht der erfindungsgemäß ermittelten Zielschnittebene auf Höhe der Oberkante des Nutzpflanzenbestandes, Ebene E3 zeigt die Oberkante eines Unkrautbestandes im Stengelbereich des Nutzpflanzenbestandes an, und Ebene E4 zeigt die Bodenebene an. Dabei ist jeweils ein und dieselbe Art von Nutzpflanzen N graphisch dargestellt. Der Einsatz der vorliegenden Erfindung ist jedoch nicht auf eine einzelne Art von Nutzpflanzen N, und besonders nicht auf die gezeigte Art von Nutzpflanzen N eingeschränkt. Auch zeigen die Figuren fünf unterschiedliche Arten von Unkräutern U1, U2, U3, U4 und U5. Der Einsatz der vorliegenden Erfindung ist jedoch nicht auf lediglich 2 bis 5 unterschiedliche Arten von Unkräutern U1 bis U5, und besonders nicht auf die gezeigten Arten von Unkräutern U1 bis U5 eingeschränkt.

Die Erfindung beruht auf der Erkenntnis, dass eine mechanische Entfernung eines über den Nutzpflanzenbestand b hinausragenden Unkrautbestandes a mittels eines mechanischen Schnittsystems, einen erheblichen Beitrag zur Feldhygiene leisten kann. Dies war bisher nicht möglich, da bekannte Systeme nicht dazu in der Lage waren, die Oberkante E2 des Nutzpflanzenbestandes b zu ermitteln, wenn diese unterhalb einer Oberkante E1 des gesamten Bewuchsbestandes a, b und c liegt.

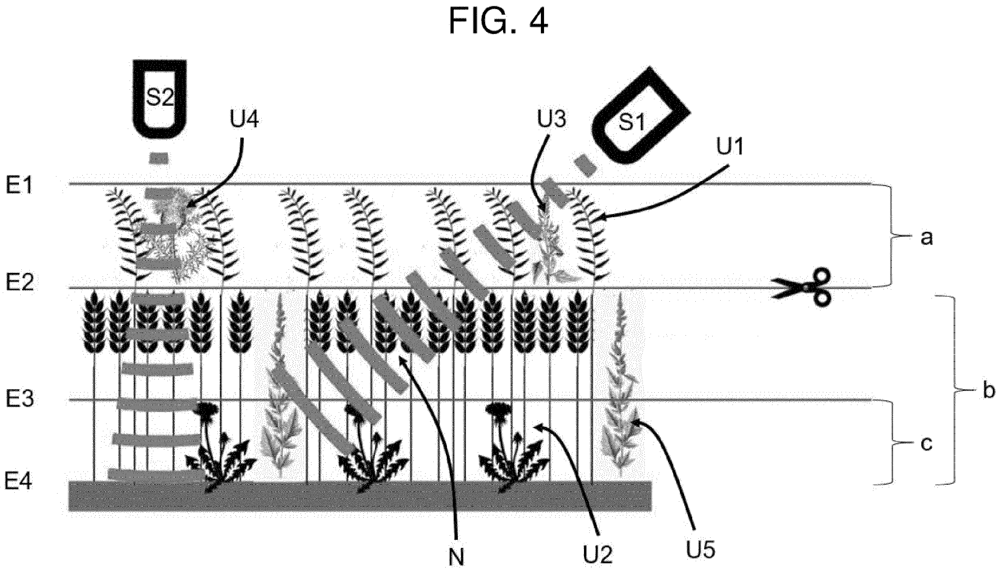

Wie in Fig. 4 gezeigt ist, schlägt die vorliegende Erfindung die Ermittlung der genannten Zielschnittebene E2 mittels einer entsprechenden Sensorik S1 und S2 und einer zugehörigen Auswerteinheit vor. Die Ermittlung dieser Zielschnittebene E2, welche oberhalb der Bodenebene E4, oberhalb der Oberkante E3 eines Unkrautbestandes c im Stengelbereich des Nutzpflanzenbestandes b und unterhalb der Oberkante E1 des gesamten Bewuchsbestandes a, b und c liegt, ist Voraussetzung für die erfindungsgemäß verbesserte Feldhygiene.

Durch die zuverlässige und zielsichere Ermittlung dieser Zwischenebene E2 kann mittels eins mechanischen Schnittsystems zielsicher der Unkrautüberstand a entfernt werden. Dabei kann das entfernte Unkraut und insbesondere die darin enthaltene Unkrautsaat direkt eingesammelt werden. Damit kann verhindert werden, dass das Unkraut durch herabfallende Samen erneut ausgesät wird. Da heutzutage viele der verbreiteten Unkräuter resistent gegenüber den üblichen chemischen und/oder biologischen Unkrautvernichtern sind, ist die mechanische Entfernung des jeweiligen Überstandes a ein geeigneter Weg zur Bekämpfung dieser resistenten Unkräuter. Ferner ist die mechanische Bekämpfung des Unkrauts umweltverträglicher und dabei konform mit Regelungen des biologischen Anbaus und des Wasserschutzes.

Zur Ermittlung der jeweiligen Zielschnittebene greift eine Auswerteinheit der Höhenführung auf eine Sensorik S1 und S2 zurück, welche den Bewuchsbestand a, b und c des jeweiligen Feldes ermittelt. Dabei ermittelt die Sensorik S1 und S2 insbesondere jeweils den Bewuchsbestand a, b und c in einem bestimmten Bereich des Feldes vor dem entsprechenden Schnittsystem, während das Schnittsystem das Feld abfährt.

Zur besonders zuverlässigen Ermittlung des Bewuchsbestandes a, b und c umfasst die entsprechende Sensorik mindestens zwei Sensoren S1 und S2. Die Auswerteinheit ist dabei dazu ausgebildet, die Lage der Zielschnittebene E2 anhand der Signale eines ersten Satzes dieser Sensoren S1 und S2 zu ermitteln.

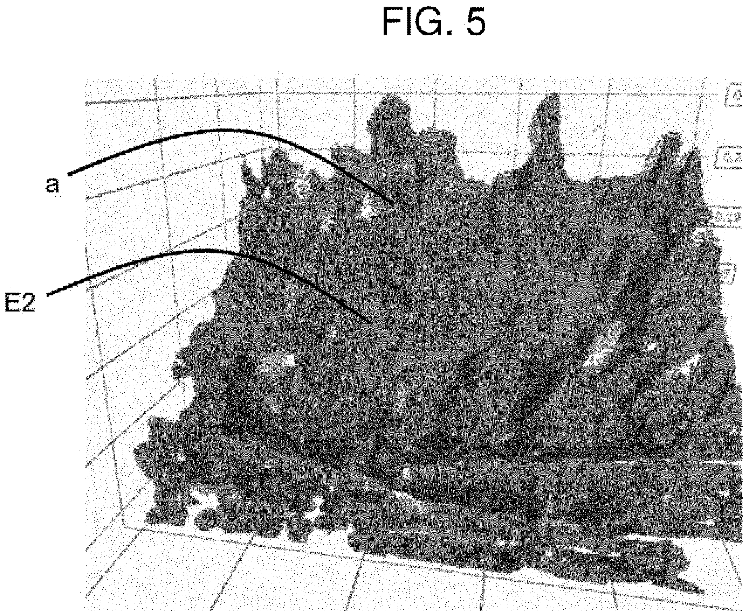

Im beispielhaften Fall einer 3D-Stereo-Kamera S1 als Sensor einer solchen Sensorik wird durch den Sensor S1 ein Abbild des Bewuchsbestandes a, b und c aufgenommen. In der Auswerteinheit wird das von der 3D-Stereo-Kamera S1 erhaltene Abbild (beziehungsweise die Bilder) in eine 3D-Punktwolke umgewandelt. Eine graphische Darstellung einer solchen 3D-Punktwolke ist beispielsweise in FIG. 5 gezeigt.

Die Auswerteinheit ist dazu ausgebildet, über übliche graphische Analysemethoden dieses Bild zu analysieren und die Zielschnittebene E2, welche die Oberkante des Nutzpflanzenbestandes b anzeigt, zu identifizieren. Der Unkrautbestand ragt dabei insbesondere ungleichmäßig über die Oberkante E2 des Nutzpflanzenbestandes b und damit über die ermittelte Zielschnittebene E2 hinaus.

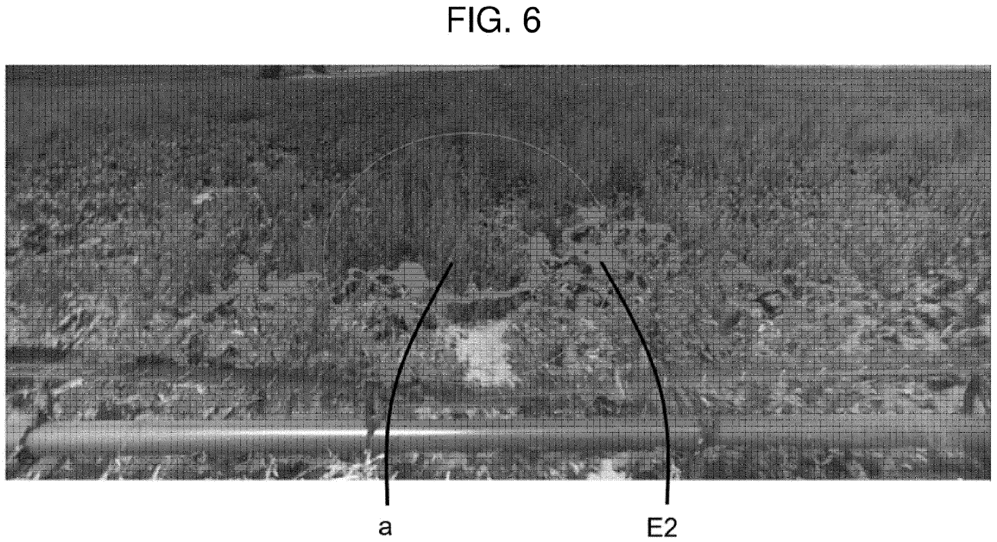

FIG. 6 zeigt ein Foto des Feldes aus Sicht des Schnittsystems mit der ermittelten und virtuell ergänzten Zielschnittebene E2, welche die Oberkante des Nutzpflanzenbestandes b anzeigt, sowie dem zu entfernenden Unkrautüberstand a. Wird nun die Schnittebene des Schnittsystems auf die Höhe der Zielschnittebene E2 eingestellt, kann der Unkrautüberstand a mittels des Schnittsystems zuverlässig und zielsicher entfernt werden.

Zur noch sichereren genauen Ermittlung der Lage der Zielschnittebene E2 kann die Auswerteinheit ferner dazu ausgebildet sein, anhand der Signale eines zweiten Satzes von Sensoren S2, welcher sich von dem ersten Satz von Sensoren S1 unterscheidet, die Lage der Zielschnittebene E2 zu verifizieren.

Dabei enthält der zweite Satz von Sensoren S2 insbesondere eine andere Art von Sensoren, als zur ursprünglichen Ermittlung der Zielschnittebene E2 eingesetzt wurden. Falls, wie im vorliegenden Ausführungsbeispiel eine 3D-Stereo-Kamera S1 als Sensor für die Ermittlung der Zielschnittebene E2 eingesetzt wird, eignet sich zur Verifizierung der Zielschnittebene E2 beispielsweise ein Ultraschall- oder Radar-Sensor S2.

Die Auswahl der Sensoren S1 und S2 für die Sensorik ist jedoch nicht auf die oben genannten Beispiele beschränkt. Insgesamt kann die Sensorik mindestens einen optischen Sensor, also beispielsweise eine 2D-, 3D-, Stereo- und/oder Multispektral-Kamera, einen Lasersensor, einen LiDAR-Sensor, einen akustischen Sensor, wie beispielsweise einen Ultraschallsensor, und/oder einen Radarsensor, sowohl zur Ermittlung als auch zur Verifizierung der Zielschnittebene umfassen.

Von Vorteil ist es dabei, wenn die Sensorik S1 und S2 mindestens einen kontaktlosen Sensor, und insbesondere nur kontaktlose Sensoren, zur Ermittlung des Bewuchsbestandes a, b und c des Feldes umfasst. Solche kontaktlosen Sensoren erlauben eine umfassendere Abbildung des Bewuchsbestandes a, b und c und sind im Allgemeinen weniger verschleißanfällig. Zur Verifizierung der ermittelten Zielschnittebene E2 kann es jedoch durchaus sinnvoll sein, auf einen üblicherweise relativ kostengünstigen Kontaktsensor zur mechanischen Abtastung zurückzugreifen.

Bevorzugt kann die Auswerteinheit ferner dazu ausgebildet sein, neben der Zielschnittebene E2 die Oberkante E1 des gesamten Bewuchsbestandes a, b und c, welche oberhalb der Zielschnittebene E2 liegt, die Oberkante E3 eines Unkrautbestandes c im Stengelbereich des Nutzpflanzenbestandes b und/oder die Bodenebene E4 zu ermitteln. Diese Informationen können zur weiteren Auswertung beziehungsweise Analyse des Bewuchsbestandes a, b und c, zur noch genaueren Ermittlung der Zielschnittebene E2 und/oder zur Ansteuerung einer Steuereinheit zur Einstellung einer Schnittebene des Schnittsystems auf die Zielschnittebene E2 genutzt werden.

Im letzteren Fall kann die Auswerteinheit beispielsweise dazu ausgebildet sein, die Zielschnittebene E2 über eine positive Höhe in Bezug auf die Bodenebene E4 oder über eine negative Höhe in Bezug auf die Oberkante E1 des gesamten Bewuchsbestandes a, b und c zu ermitteln. Die Höhe der Schnittebene des Schnittsystems wird dann anhand des entsprechenden Höhenwerts relativ zur Bodenebene E4 beziehungsweise zur Oberkante E1 des gesamten Bewuchsbestandes a, b und c auf die ermittelte Zielschnittebene E2 eingestellt.

Die Ermittlung der Bodenebene E4 und/oder der Oberkante E1 des gesamten Bewuchsbestandes a, b und c kann dabei entweder in herkömmlicher Weise mittels mechanischer Kontaktsensoren oder über kontaktlose Sensoren erfolgen.

Zur Ausgabe eines Signals, welches die Lage der ermittelten Zielschnittebene e2 anzeigt, ist die Auswerteinheit bevorzugt mit einer Ausgabeeinheit gekoppelt oder zumindest koppelbar.

Eine solche Ausgabeeinheit kann beispielsweise eine optische Anzeige, wie beispielsweise einen Bildschirm oder eine LED-Anzeige, zur Information eines Benutzers des Schnittsystems über die Lage der ermittelten Zielschnittebene E2 umfassen. Alternativ oder ergänzend dazu, kann die Ausgabeeinheit auch dazu ausgebildet sein, direkt mit einer Steuereinheit des Schnittsystems gekoppelt zu werden, um unmittelbar die Schnittebene des Schnittsystems auf die ermittelte Zielschnittebene E2 einzustellen. Dieses direkte Steuersignal ist bevorzugt durch die manuelle Eingabe eines Benutzers des Schnittsystems überschreibbar beziehungsweise modifizierbar, um bei Bedarf eine manuelle Optimierung der Schnittebene des Schnittsystems vornehmen zu können.

Ein erfindungsgemäßes Schnittsystem zeichnet sich durch eine Schnitteinheit zur Beschneidung des Bewuchses eines Feldes, eine Steuereinheit zur Einstellung einer Schnittebene des Schnittsystems und eine erfindungsgemäße Höhenführung zur Ermittlung der Zielschnittebene E2 aus. Nachdem entsprechende Schnittsysteme in ihrem grundlegenden Aufbau wohlbekannt sind, wird hier nicht weiter auf die strukturelle und funktionelle Ausgestaltung solcher Vorrichtungen eingegangen.

Schließlich sei noch auf das erfindungsgemäße Verfahren zur Höhenführung eines entsprechenden Schnittsystems eingegangen. Insbesondere ist das Verfahren mit dem zuvor beschriebenen Schnittsystem mit einer erfindungsgemäßen Höhenführung durchführbar.

Nach der Ermittlung eines Bewuchsbestandes a, b und c eines Feldes mittels einer entsprechenden Sensorik S1 und S2 erfolgt die Analyse des ermittelten Bewuchsbestandes a, b und c mittels einer entsprechenden Auswerteinheit und die automatische Ermittlung der jeweiligen Zielschnittebene E2. Schließlich wird die Schnittebene des Schnittsystems auf die ermittelte Zielschnittebene E2 eingestellt.

Somit ist es dem Schnittsystem möglich, zuverlässig und zielsicher den Unkrautüberstand a des Feldes, welcher über die Oberkante E2 des Nutzpflanzenbestandes b hinausragt, abzuschneiden und gegebenenfalls einzusammeln.

Bevorzugt erfolgt dabei die zur Ermittlung der Zielschnittebene E2 vorgenommene Ermittlung des Bewuchsbestandes a, b und c im Wesentlichen, insbesondere vollständig, kontaktlos. Mit anderen Worten, die entsprechend eingesetzte Sensorik S1 und S2 enthält im Wesentlichen beziehungsweise nur kontaktlose Sensoren, welche den Bewuchsbestand a, b und c ermitteln. Dies schließt jedoch nicht aus, dass mechanische Kontaktsensoren für eine Verifizierung der ermittelten Zielschnittebene E2 oder zum Sammeln anderer nicht zur Ermittlung der Zielschnittebene E2 vorgesehener Informationen eingesetzt werden.

Wie bereits oben angedeutet, kann neben der Ermittlung der Zielschnittebene E2 auch die darüber liegende Oberkante E1 des gesamten Bewuchsbestandes a, b und c, eine darunter liegende Oberkante E3 eines Unkrautbestandes c im Stengelbereich des Nutzpflanzenbestandes b und/oder die Bodenebene E4 ermittelt werden. Entsprechende Informationen können dann insbesondere bei der abschließenden Einstellung der Schnittebene des Schnittsystems auf die Zielschnittebene E2 berücksichtigt werden.

Beispielsweise kann sowohl die Bodenebene E4 als auch die Oberkante E1 des gesamten Bewuchsbestandes a, b und c als geeigneter Bezugspunkt für die Einstellung der Schnittebene auf die Zielschnittebene E2 fungieren.

Abschließend sei darauf hingewiesen, dass die hier verwendeten Begriffe stets vor dem Hintergrund des technischen Umfelds der vorliegenden Erfindung zu verstehen sind. Vor dem Hintergrund der Feldhygiene ist beispielsweise die Formulierung "Ermittlung des Bewuchsbestandes a, b und c eines Feldes" nicht derart zu verstehen, dass erst einmal das gesamte Feld abgescannt werden muss, um schließlich die Zielschnittebene E2 zu ermitteln. Vielmehr ist diese Formulierung dahingehend zu verstehen, dass fortlaufend der Bewuchsbestand a, b und c in einem bestimmten Bereich vor dem jeweiligen Schnittsystem ermittelt und analysiert wird, während das Schnittsystem das Feld abfährt. Die Einstellung der Schnittebene auf die Zielschnittebene E2 erfolgt dabei in einem kontinuierlichen Prozess.

Vor diesem Hintergrund sind auch die Begriffe "Zielschnittebene E2" und "Schnittebene" nicht in einem absoluten mathematischen Verständnis des Begriffs "Ebene" als unendlich ausgedehnte flache Fläche zu betrachten. Vielmehr sind diese Begriffe als abstraktere beziehungsweise verallgemeinerte Umschreibungen für eine "Zielschnitthöhe" beziehungsweise "Schnitthöhe" in Bezug auf die "Bodenebene E4" zu verstehen. Dabei kann die "Zielschnittebene E2" beziehungsweise die "Schnittebene" gegenüber der "Bodenebene" auch geneigt sein, weshalb der Begriff der "Höhe" zu eng wäre. Natürlich ist dabei auch der Begriff der "Bodenebene E4" breit zu verstehen, da der Boden von Feldern nie eine Ebene im mathematischen Sinne darstellt.

Der verwendete Begriff des (gesamten) Bewuchsbestandes a, b und c soll dabei anzeigen, dass dieser sowohl den Nutzpflanzenbestand b als auch den Unkrautbestand c und a umfasst. Als Nutzpflanzen N werden dabei die aktiv angesäten Pflanzen betrachtet, welche ursprünglich zur Ernte vorgesehen wurden. Als Unkraut U1 bis U5 werden all jene Pflanzen betrachtet, welche nicht aktiv angesät und ursprünglich zur Ernte vorgesehen wurden.

### Bezugszeichenliste

- a: Unkrautüberstand
- b: Nutzpflanzenbestand
- c: Unkrautbestand im Stengelbereich
- E1: Oberkante des Gesamtbestandes
- E2: Oberkante des Nutzpflanzenbestandes/Zielschnittebene
- E3: Oberkante des Unkrautbestandes im Stengelbereich
- E4: Bodenebene
- N: Nutzpflanzen
- U1: Unkraut erster Art
- U2: Unkraut zweiter Art
- U3: Unkraut dritter Art
- U4: Unkraut vierter Art
- U5: Unkraut fünfter Art
- S1: erster Sensor/3D-Stereo-Kamera
- S2: zweiter Sensor/Ultraschall- oder Radar-Sensor

## Patentansprüche

1. Höhenführung für ein Schnittsystem zur Feldhygiene, insbesondere für einen Unkrautschneider und/oder eine Unkrautsamensammeleinheit, umfassend:
eine Sensorik (S1, S2) zur Ermittlung eines Bewuchsbestandes (a, b, c) eines Feldes, und
eine Auswerteinheit, welche mit der Sensorik (S1, S2) gekoppelt ist,
wobei die Auswerteinheit dazu ausgebildet ist, den ermittelten Bewuchsbestand (a, b, c) zu analysieren,
**dadurch gekennzeichnet, dass**
die Auswerteinheit ferner dazu ausgebildet ist, eine Zielschnittebene (E2) zu ermitteln, welche auf Höhe der Oberkante eines Nutzpflanzenbestandes (b) liegt, welche selbst unterhalb einer Oberkante (E1) des gesamten Bewuchsbestandes (a, b, c) liegt,

2. Höhenführung nach Anspruch 1,
dadurch**gekennzeichnet**, dass
die Sensorik (S1, S2) mindestens einen kontaktlosen Sensor (S1, S2) umfasst,
wobei die Sensorik (S1, S2) insbesondere nur kontaktlose Sensoren (S1, S2) umfasst.

3. Höhenführung nach einem der vorhergehenden Ansprüche,
**dadurch gekennzeichnet, dass**
die Sensorik (S1, S2) mindestens einen der folgenden Sensoren umfasst: einen optischen Sensor, insbesondere eine 2D-, 3D-, Stereo- und/oder eine Multispektral-Kamera; einen Lasersensor; einen LiDAR-Sensor; einen akustischen Sensor, insbesondere einen Ultraschallsensor; und/oder einen Radarsensor.

4. Höhenführung nach einem der vorhergehenden Ansprüche,
**dadurch gekennzeichnet, dass**
die Sensorik mindestens zwei Sensoren (S1, S2) umfasst und die Auswerteinheit dazu ausgebildet ist, die Zielschnittebene (E2) basierend auf den Signalen von mindestens zwei dieser Sensoren (S1, S2) zu ermitteln und/oder zu verifizieren.

5. Höhenführung nach einem der vorhergehenden Ansprüche,
**dadurch gekennzeichnet, dass**
die Auswerteinheit dazu ausgebildet ist, anhand eines ersten Satzes von Sensoren (S1) die Zielschnittebene (E2) zu ermitteln und anhand eines zweiten Satzes von Sensoren (S2), welcher insbesondere Sensoren (S2) umfasst, welche nicht auch dem ersten Satz von Sensoren (E1) zugeordnet sind, die Zielschnittebene (E2) zu verifizieren.

6. Höhenführung nach einem der vorhergehenden Ansprüche,
**dadurch gekennzeichnet, dass**
die Sensorik eine 3D-Stereo-Kamera (S1) aufweist und die Auswerteinheit dazu ausgebildet ist, die Zielschnittebene (E2) mittels Auswertung einer darüber erhaltenen 3D-Punktwolke zu ermitteln.

7. Höhenführung nach einem der vorhergehenden Ansprüche,
**dadurch gekennzeichnet, dass**
die Sensorik einen Ultraschall- oder Radar-Sensor (S2) umfasst und die Auswerteinheit dazu ausgebildet ist, eine bereits ermittelte Zielschnittebene (E2) anhand der Ausgabe des Ultraschall- oder Radar-Sensors (S2) zu verifizieren.

8. Höhenführung nach einem der vorhergehenden Ansprüche,
dadurch**gekennzeichnet**, dass
die Auswerteinheit dazu ausgebildet ist, die Oberkante (E1) des gesamten Bewuchsbestandes (a, b, c) und/oder eine Oberkante (E3) eines Unkrautbestandes (c) im Stengelbereich des Nutzpflanzenbestandes (b) und/oder die Bodenebene (E4) zu ermitteln,
wobei die Auswerteinheit insbesondere dazu ausgebildet ist, die Zielschnittebene (E2) über eine positive Höhe in Bezug auf die Bodenebene (E4) oder über eine negative Höhe in Bezug auf die Oberkante (E1) des gesamten Bewuchsbestandes (a, b, c) zu ermitteln.

9. Höhenführung nach einem der vorhergehenden Ansprüche,
dadurch**gekennzeichnet**, dass
die Auswerteinheit mit wenigstens einer Ausgabeeinheit, welche ein Signal ausgibt, welches die Lage der Zielschnittebene (E2) anzeigt, gekoppelt oder koppelbar ist,
wobei die Ausgabeeinheit insbesondere eine optische Anzeige, beispielsweise in Gestalt eines Bildschirms oder einer LED-Anzeige, umfasst, welche einen Benutzer des Schnittsystems über die Lage der ermittelten Zielschnittebene (E2) informiert.

10. Höhenführung nach Anspruch 9,
dadurch**gekennzeichnet**, dass
die Ausgabeeinheit dazu ausgebildet ist, mit einer Steuereinheit des Schnittsystems gekoppelt zu werden und an die Steuereinheit ein Steuersignal auszugeben, welches eine Schnittebene des Schnittsystems entsprechend der ermittelten Zielschnittebene (E2) einstellt.

11. Schnittsystem zur Feldhygiene, insbesondere Unkrautschneider und/oder Unkrautsamensammeleinheit, umfassend:
eine Schnitteinheit zur Beschneidung des Bewuchses eines Feldes,
eine Steuereinheit zur Einstellung einer Schnittebene des Schnittsystems, und
eine Höhenführung nach einem der vorhergehenden Ansprüche.

12. Verfahren zur Höhenführung eines Schnittsystem zur Feldhygiene, insbesondere eines Schnittsystems nach Anspruch 11,
**gekennzeichnet**
**durch** die folgenden Schritte:
Ermittlung eines Bewuchsbestandes (a, b, c) eines Feldes mittels einer Sensorik (S1, S2),
Analyse des ermittelten Bewuchsbestandes (a, b, c) mittels einer Auswerteinheit,
Automatische Ermittlung einer Zielschnittebene (E2), welche auf Höhe einer Oberkante eines Nutzpflanzenbestandes (b) liegt, welche selbst unterhalb einer Oberkante (E1) des gesamten Bewuchsbestandes (a, b, c) liegt, und
Einstellung einer Schnittebene des Schnittsystems auf die ermittelte Zielschnittebene (E2).

13. Verfahren nach Anspruch 12,
dadurch**gekennzeichnet**, dass
die Ermittlung des Bewuchsbestandes (a, b, c) im Wesentlichen, insbesondere vollständig, kontaktlos erfolgt.

14. Verfahren nach Anspruch 12 oder 13,
dadurch**gekennzeichnet**, dass
auch die Oberkante (E1) des gesamten Bewuchsbestandes (a, b, c), eine Oberkante (E3) eines Unkrautbestandes (c) im Stengelbereich des Nutzpflanzenbestandes (b) und/oder die Bodenebene (E4) ermittelt und insbesondere bei der Einstellung der Schnittebene berücksichtigt werden.

15. Verfahren nach Anspruch 14,
dadurch**gekennzeichnet**, dass
die Zielschnittebene (E2) über eine positive Höhe in Bezug auf die Bodenebene (E4) oder über eine negative Höhe in Bezug auf die Oberkante (E1) des gesamten Bewuchsbestandes (a, b, c) ermittelt wird.

## Claims

1. A height guide for a cutting system for field hygiene, in particular for a weed cutter and/or a weed seed collection unit, said height guide comprising:
a sensor system (S1, S2) for determining a vegetation stand (a, b, c) of a field, and
an evaluation unit which is coupled to the sensor system (S1, S2),
wherein the evaluation unit is configured to analyze the determined vegetation stand (a, b, c),
**characterized in that**
the evaluation unit is further configured to determine a target cutting plane (E2) which lies at the level of the upper edge of a crop stand (b), said upper edge of a crop stand (b) itself lying below an upper edge (E1) of the entire vegetation stand (a, b, c).

2. A height guide according to claim 1,
**characterized in that**
the sensor system (S1, S2) comprises at least one contactless sensor (S1, S2),
wherein the sensor system (S1, S2) in particular only comprises contactless sensors (S1, S2).

3. A height guide according to any one of the preceding claims,
**characterized in that**
the sensor system (S1, S2) comprises at least one of the following sensors: an optical sensor, in particular a 2D camera, a 3D camera, a stereo camera and/or a multispectral camera; a laser sensor; a LiDAR sensor; an acoustic sensor, in particular an ultrasonic sensor; and/or a radar sensor.

4. A height guide according to any one of the preceding claims,
**characterized in that**
the sensor system comprises at least two sensors (S1, S2) and the evaluation unit is configured to determine and/or to verify the target cutting plane (E2) based on the signals of at least two of these sensors (S1, S2).

5. A height guide according to any one of the preceding claims,
**characterized in that**
the evaluation unit is configured to determine the target cutting plane (E2) using a first set of sensors (S1) and to verify the target cutting plane (E2) using a second set of sensors (S2) which in particular comprises sensors (S2) which are not also assigned to the first set of sensors (E1).

6. A height guide according to any one of the preceding claims,
**characterized in that**
the sensor system has a 3D stereo camera (S1) and the evaluation unit is configured to determine the target cutting plane (E2) by means of an evaluation of a 3D point cloud obtained above said target cutting plane (E2).

7. A height guide according to any one of the preceding claims,
**characterized in that**
the sensor system comprises an ultrasonic or radar sensor (S2) and the evaluation unit is configured to verify an already determined target cutting plane (E2) based on the output of the ultrasonic or radar sensor (S2).

8. A height guide according to any one of the preceding claims,
**characterized in that**
the evaluation unit is configured to determine the upper edge (E1) of the entire vegetation stand (a, b, c) and/or an upper edge (E3) of a weed stand (c) in the stem region of the crop stand (b) and/or the ground plane (E4),
wherein the evaluation unit is in particular configured to determine the target cutting plane (E2) via a positive height with respect to the ground plane (E4) or via a negative height with respect to the upper edge (E1) of the entire vegetation stand (a, b, c).

9. A height guide according to any one of the preceding claims,
**characterized in that**
the evaluation unit is coupled or can be coupled to at least one output unit which outputs a signal that indicates the position of the target cutting plane (E2),
wherein the output unit in particular comprises an optical display, for example in the form of a screen or an LED display, which informs a user of the cutting system about the position of the determined target cutting plane (E2).

10. A height guide according to claim 9,
**characterized in that**
the output unit is configured to be coupled to a control unit of the cutting system and to output a control signal to the control unit, said control signal setting a cutting plane of the cutting system in accordance with the determined target cutting plane (E2).

11. A cutting system for field hygiene, in particular a weed cutter and/or a weed seed collection unit, comprising:
a cutting unit for trimming the vegetation of a field,
a control unit for setting a cutting plane of the cutting system, and
a height guide according to any one of the preceding claims.

12. A method for the height guidance of a cutting system for field hygiene, in particular a cutting system according to claim 11,
**characterized**
**by** the following steps:
determining a vegetation stand (a, b, c) of a field by means of a sensor system (S1, S2),
analyzing the determined vegetation stand (a, b, c) by means of an evaluation unit,
automatically determining a target cutting plane (E2) which lies at the level of an upper edge of a crop stand (b), said upper edge of a crop stand (b) itself lying below an upper edge (E1) of the entire vegetation stand (a, b, c), and
setting a cutting plane of the cutting system to the determined target cutting plane (E2).

13. A method according to claim 12,
**characterized in that**
the determination of the vegetation stand (a, b, c) takes place substantially, in particular completely, in a contactless manner.

14. A method according to claim 12 or 13,
**characterized in that**
the upper edge (E1) of the entire vegetation stand (a, b, c), an upper edge (E3) of a weed stand (c) in the stem region of the crop stand (b) and/or the ground plane (E4) are also determined and are in particular considered when setting the cutting plane.

15. A method according to claim 14,
**characterized in that**
the target cutting plane (E2) is determined via a positive height with respect to the ground plane (E4) or via a negative height with respect to the upper edge (E1) of the entire vegetation stand (a, b, c).

## Revendications

1. Guidage en hauteur pour système de coupe destiné à l'hygiène des champs, en particulier pour un dispositif de coupe de mauvaises herbes et/ou une unité de collecte de semences de mauvaises herbes, comprenant :
un système de capteurs (S1, S2) destiné à déterminer un peuplement végétal (a, b, c) d'un champ, et
une unité d'évaluation qui est couplée au système de capteurs (S1, S2),
dans lequel l'unité d'évaluation est configurée pour analyser le peuplement végétal déterminé (a, b, c),
**caractérisé en ce que**
l'unité d'évaluation est en outre configurée pour déterminer un plan de coupe cible (E2) qui se trouve à hauteur du bord supérieur d'un peuplement de plantes cultivées (b), qui lui-même se trouve en dessous d'un bord supérieur (E1) de l'ensemble du peuplement végétal (a, b, c).

2. Guidage en hauteur selon la revendication 1,
**caractérisé en ce que**
le système de capteurs (S1, S2) comprend au moins un capteur sans contact (S1, S2),
dans lequel le système de capteurs (S1, S2) comprend en particulier uniquement des capteurs sans contact (S1, S2).

3. Guidage en hauteur selon l'une des revendications précédentes,
**caractérisé en ce que**
le système de capteurs (S1, S2) comprend l'un au moins des capteurs suivants :
un capteur optique, en particulier une caméra 2D, 3D, stéréoscopique et/ou multis-pectrale ; un capteur laser ; un capteur LiDAR ; un capteur acoustique, en particulier un capteur à ultrasons ; et/ou un capteur radar.

4. Guidage en hauteur selon l'une des revendications précédentes,
**caractérisé en ce que**
le système de capteurs comprend au moins deux capteurs (S1, S2) et l'unité d'évaluation est configurée pour déterminer et/ou vérifier le plan de coupe cible (E2) sur la base des signaux d'au moins deux de ces capteurs (S1, S2).

5. Guidage en hauteur selon l'une des revendications précédentes,
**caractérisé en ce que**
l'unité d'évaluation est configurée pour déterminer le plan de coupe cible (E2) sur la base d'un premier ensemble de capteurs (S1) et pour vérifier le plan de coupe cible (E2) sur la base d'un second ensemble de capteurs (S2), qui comprend en particulier des capteurs (S2) qui ne sont pas également associés au premier ensemble de capteurs (E1).

6. Guidage en hauteur selon l'une des revendications précédentes,
**caractérisé en ce que**
le système de capteurs présente une caméra stéréoscopique 3D (S1) et l'unité d'évaluation est configurée pour déterminer le plan de coupe cible (E2) au moyen de l'évaluation d'un nuage de points 3D obtenu à partir de celui-ci.

7. Guidage en hauteur selon l'une des revendications précédentes,
**caractérisé en ce que**
le système de capteurs comprend un capteur à ultrasons ou radar (S2) et l'unité d'évaluation est configurée pour vérifier un plan de coupe cible déjà déterminé (E2) sur la base de la sortie du capteur à ultrasons ou radar (S2).

8. Guidage en hauteur selon l'une des revendications précédentes,
**caractérisé en ce que**
l'unité d'évaluation est configurée pour déterminer le bord supérieur (E1) de l'ensemble du peuplement végétal (a, b, c) et/ou un bord supérieur (E3) d'un peuplement de mauvaises herbes (c) dans la région de la tige du peuplement de plantes cultivées (b) et/ou le plan du sol (E4),
dans lequel l'unité d'évaluation est en particulier configurée pour déterminer le plan de coupe cible (E2) au moyen d'une hauteur positive par rapport au plan du sol (E4) ou au moyen d'une hauteur négative par rapport au bord supérieur (E1) de l'ensemble du peuplement végétal (a, b, c).

9. Guidage en hauteur selon l'une des revendications précédentes,
**caractérisé en ce que**
l'unité d'évaluation est couplée ou peut être couplée à au moins une unité de sortie qui délivre un signal qui indique la position du plan de coupe cible (E2),
dans lequel l'unité de sortie comprend en particulier un affichage optique, par exemple sous la forme d'un écran ou d'un affichage à LED, qui informe un utilisateur du système de coupe de la position du plan de coupe cible déterminé (E2).

10. Guidage en hauteur selon la revendication 9,
**caractérisé en ce que**
l'unité de sortie est configurée pour être couplée à une unité de commande du système de coupe et pour délivrer à l'unité de commande un signal de commande qui règle un plan de coupe du système de coupe conformément au plan de coupe cible déterminé (E2).

11. Système de coupe destiné à l'hygiène des champs, en particulier dispositif de coupe de mauvaises herbes et/ou unité de collecte de semences de mauvaises herbes, comprenant :
une unité de coupe destinée à couper la végétation d'un champ,
une unité de commande destinée au réglage d'un plan de coupe du système de coupe, et
un guidage en hauteur selon l'une des revendications précédentes.

12. Procédé de guidage en hauteur d'un système de coupe destiné à l'hygiène des champs, en particulier d'un système de coupe selon la revendication 11, **caractérisé par** les étapes suivantes :
détermination d'un peuplement végétal (a, b, c) d'un champ au moyen d'un système de capteurs (S1, S2),
analyse du peuplement végétal déterminé (a, b, c) au moyen d'une unité d'évaluation,
détermination automatique d'un plan de coupe cible (E2), qui se trouve à hauteur d'un bord supérieur d'un peuplement de plantes cultivées (b), qui lui-même se trouve en dessous d'un bord supérieur (E1) de l'ensemble du peuplement végétal (a, b, c) et
réglage d'un plan de coupe du système de coupe sur le plan de coupe cible déterminé (E2).

13. Procédé selon la revendication 12,
**caractérisé en ce que**
la détermination du peuplement végétal (a, b, c) est effectuée sensiblement, en particulier complètement, sans contact.

14. Procédé selon la revendication 12 ou 13,
**caractérisé en ce que**
le bord supérieur (E1) de l'ensemble du peuplement végétal (a, b, c), un bord supérieur (E3) d'un peuplement de mauvaises herbes (c) dans la région de la tige du peuplement de plantes cultivées (b) et/ou le plan du sol (E4) sont également déterminés et sont notamment pris en compte lors du réglage du plan de coupe.

15. Procédé selon la revendication 14,
**caractérisé en ce que**
le plan de coupe cible (E2) est déterminé au moyen d'une hauteur positive par rapport au plan du sol (E4) ou au moyen d'une hauteur négative par rapport au bord supérieur (E1) de l'ensemble du peuplement végétal (a, b, c).
